# EUROPEAN PATENT APPLICATION

(11) **EP 4 629 359 A1**
(43) Date of publication of application: **08.10.2025**
(21) Application number: 23907474.3
(22) Date of filing: 27.11.2023
(51) Int. Cl.: H01M 10/04, H01M 50/264, H01M 50/242, H01M 50/211, H01M 10/658, H01M 50/502, H01M 50/251

(54) **BATTERY PACK AND ENERGY STORAGE DEVICE INCLUDING SAME**

(30) Priority: 22.12.2022 KR 20220181731; 23.10.2023 KR 20230142184
(71) Applicant: LG Energy Solution, Ltd., Seoul 07335 (KR)
(72) Inventor: JO, Sang-Hyun, Daejeon 34122 (KR); KONG, Yu-Dam, Daejeon 34122 (KR); SIM, Chang-Hwi, Daejeon 34122 (KR); OH, Young-Hoo, Daejeon 34122 (KR); OK, Seung-Min, Daejeon 34122 (KR); CHO, Young-Bum, Daejeon 34122 (KR)
(74) Representative: Plasseraud IP
(86) International application number: PCT/KR2023/019259
(87) International publication number: WO 2024/136188

(57) **Abstract**

A battery pack according to the present disclosure includes at least one cell assembly and a pack case configured to accommodate the at least one cell assembly, wherein the cell assembly may include: two or more cell stacks including stacked battery cells; a cell pressurization unit disposed at the outermost positions on both sides of each cell stack in the stacking direction of the battery cells and configured to provide pressing force to each cell stack; and a bus-bar frame assembly disposed at the front and rear of the cell stacks in a direction intersecting the stacking direction of the battery cells and configured to electrically connect the battery cells and integrally support the two or more cell stacks and the cell pressurization unit.

## Description

### TECHNICAL FIELD

The present disclosure relates to a battery pack, and more specifically, it relates to a battery pack capable of suppressing heat propagation between battery cells and reduction in the performance due to cell swelling, ensuring fire safety, and minimizing deformation of the battery pack.

The present application claims priority to Korean Patent Application No. 10-2022-0181731 filed on December 22, 2022 and Korean Patent Application No. 10-2023-0142184 filed on October 23, 2023 in the Republic of Korea, the disclosures of which are incorporated herein by reference.

### BACKGROUND ART

Currently commercialized secondary batteries include nickel-cadmium batteries, nickel-hydrogen batteries, nickel-zinc batteries, and lithium secondary batteries. Among these, lithium secondary batteries are in the spotlight for their advantages of free charging and discharging due to almost no memory effect, a very low self-discharge rate, and a high energy density, compared to nickel-based secondary batteries.

These lithium secondary batteries generally use lithium-based oxides and carbon materials as positive and negative electrode active materials, respectively. The lithium secondary batteries include an electrode assembly in which a positive electrode plate and a negative electrode plate, which are coated with positive and negative electrode active materials, respectively, are disposed with a separator therebetween, and an exterior case, i.e., an exterior battery pouch case, that seals and stores the electrode assembly with an electrolyte.

Recently, secondary batteries have been widely used in medium and large devices such as vehicles and energy storage devices, as well as in small devices such as portable electronic devices. When the secondary batteries are used in the medium and large devices, a large number of secondary batteries are electrically connected to increase capacity and output. In particular, pouch-type secondary batteries are widely used in these medium and large devices due to their advantage of being easy to stack.

Meanwhile, as large-capacity structures and utilization as an energy storage source are highly required nowadays, there is an increasing need for a battery pack including a large number of secondary batteries electrically connected in series and/or parallel, a battery module that accommodates these secondary batteries therein, and a battery management system (BMS).

In addition, such a battery pack generally includes an exterior housing made of a metal material to protect the plurality of secondary batteries from external impact or to store them. Meanwhile, demand for high-capacity battery packs is increasing nowadays.

However, high-capacity battery packs have a problem in which, when one of the plurality of secondary batteries stored therein ignites or explodes, heat and flame may transfer to adjacent secondary batteries, causing a high risk of chain ignition or explosion.

In addition, in the case of pouch-type secondary batteries, electrodes may become thick during repeated charging and discharging, or gas may be generated due to decomposition of the internal electrolyte through a side reaction, resulting in the so-called "swelling phenomenon" in which the secondary batteries swell. Conventionally, in order to suppress or alleviate the swelling phenomenon, two flat end plates are disposed at the outermost positions on both sides of the stacked pouch-type secondary batteries to pressurize the pouch-type secondary batteries. However, as the number of stacked pouch-type secondary batteries increases, it is not easy to pressurize all pouch-type secondary batteries uniformly and stably. If the swelling phenomenon worsens due to this, the performance of the secondary battery may deteriorate, and furthermore, it may cause a change in the appearance of the battery pack, which may bring bad effects to the structural stability of the battery pack.

Therefore, a high-capacity battery pack including a large number of secondary batteries is required to be designed to minimize the above problems.

### DISCLOSURE

### Technical Problem

The present disclosure has been designed to solve the problems of the related art, and therefore the present disclosure is directed to providing a battery pack capable of suppressing heat propagation between battery cells, reduction in the performance due to cell swelling, and deformation of the battery pack.

The technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery pack including at least one cell assembly and a pack case configured to accommodate the at least one cell assembly, wherein the cell assembly may include: two or more cell stacks including stacked battery cells; a cell pressurization unit disposed at the outermost positions on both sides of each cell stack in the stacking direction of the battery cells and configured to provide pressing force to each cell stack; and a bus-bar frame assembly configured to integrally support the two or more cell stacks and the cell pressurization unit at the front and rear of the cell stacks in a direction intersecting the stacking direction of the battery cells and electrically connect the battery cells.

The battery cell is a pouch-type battery cell, and the cell stacks may include: a first cell stack; and a second cell stack spaced a predetermined distance apart from the first cell stack and disposed parallel to the first cell stack, and an air layer may be provided between the first cell stack and the second cell stack.

The cell pressurization unit may include: a first left pressurization unit in contact with the leftmost battery cell of the first cell stack; a first right pressurization unit in contact with the rightmost battery cell of the first cell stack; a second left pressurization unit in contact with the leftmost battery cell of the second cell stack; and a second right pressurization unit in contact with the rightmost battery cell of the second cell stack.

Each of the first left pressurization unit, the first right pressurization unit, the second left pressurization unit, and the second right pressurization unit may include a rigid plate made of a metal material with high mechanical rigidity or a reinforced plastic material.

Each of the first left pressurization unit, the first right pressurization unit, the second left pressurization unit, and the second right pressurization unit may include: an insulating sheet attached to the surface of the rigid plate; and a compressible pad having one surface in contact with the insulating sheet and the other surface in contact with the battery cell.

The first right pressurization unit and the second left pressurization unit may be spaced a predetermined distance apart from each other, and an air layer may be provided between the first right pressurization unit and the second left pressurization unit.

The bus-bar frame assembly may include a central insertion portion into which the end of the first right pressurization unit and the end of the second left pressurization unit are inserted, and the central insertion portion may include a gap maintenance protrusion protruding into a space between the end of the first right pressurization unit and the end of the second left pressurization unit.

The cell pressurization unit may further include a first strap member having one end fixedly coupled to the first left pressurization unit and the other end fixedly coupled to the first right pressurization unit, and configured to cross the first cell stack in the width direction thereof so as to partially surround at least one of the top and bottom of the first cell stack; and a second strap member having one end fixedly coupled to the second left pressurization unit and the other end fixedly coupled to the second right pressurization unit, and configured to cross the second cell stack in the width direction thereof so as to partially surround at least one of the top and bottom of the second cell stack.

The bus-bar frame assembly may include: a bus-bar frame made of an electrically insulating material and configured to have a size capable of covering the front face or rear face of the first cell stack and the second cell stack; and a plurality of bus-bars made of a metal material, mounted to the bus-bar frame, and connected to electrode leads of the battery cells.

The at least one cell assembly may be a plurality of cell assemblies arranged side by side, and the pack case may include: a base plate configured to support the plurality of cell assemblies at the bottom of the plurality of cell assemblies; and a pack cover configured to cover the plurality of cell assemblies and coupled to the base plate.

The base plate may include: support frames provided in an edge region extending in the arrangement direction of the cell assemblies and configured to protrude upward at predetermined intervals in the arrangement direction of the cell assemblies and support the bus-bar frame assembly of each cell assembly; and recesses provided between the neighboring support frames, and the bus-bar frame assembly of each cell assembly may include: a holding plate disposed on the upper surface of the support frame; and a seating guide block protruding downward from the holding plate so as to be inserted into the recess corresponding thereto.

When the cell assemblies are seated on the base plate by inserting the respective seating guide blocks into the recesses corresponding thereto, the respective seating guide blocks and support frames are configured to form a continuous assembly wall along the arrangement direction of the cell assemblies, and the assembly wall may have a rod insertion portion where the outer surface thereof is recessed inward, and a rod member having a length corresponding to the length of the assembly wall is inserted into the rod insertion portion.

The battery cell is a pouch-type battery cell, and the pouch-type battery cell may include an exterior pouch case configured to store an electrode assembly and having a lower edge portion, a front edge portion, and a rear edge portion, which are heat-fused, and the cell stacks are disposed such that the lower edge portion of the exterior pouch case is directed to the base plate, and the base plate may include: a support rib configured to protrude from the bottom surface in a lattice structure and support the cell stacks to be spaced apart from the bottom surface; and at least one venting hole formed to pass through the bottom surface.

An air layer may be provided between the cell stacks that are spaced a predetermined distance apart from each other in the stacking direction of the battery cells, and the pack cover may have an upper venting hole formed to pass therethrough, and the base plate may have a lower venting hole formed to pass therethrough, and the upper venting hole, the air layer, and the lower venting hole may be configured to match each other in the vertical direction.

According to another aspect of the present disclosure, there may be provided an energy storage system including the battery pack described above.

### Advantageous Effects

According to the present disclosure, it is possible to provide a battery pack capable of suppressing heat propagation between battery cells, reduction in the performance due to cell swelling, and deformation of the battery pack.

In particular, according to the present disclosure, it is possible to more effectively prevent the swelling phenomenon of battery cells in the cell assembly unit through distribution of pressurized structures to the battery cells and to restrict heat propagation between the battery cells.

In addition, the present disclosure may have various other effects, and these will be described in the respective embodiments, or description of effects that may be easily inferred by those skilled in the art will be omitted.

### DESCRIPTION OF DRAWINGS

FIG. 1 is a perspective view illustrating a battery pack according to an embodiment of the present disclosure.
FIG. 2 is a diagram illustrating the battery pack in FIG. 1 from which a pack cover is separated.
FIG. 3 is a perspective view illustrating a cell assembly according to an embodiment of the present disclosure.
FIG. 4 is an exploded perspective view of the cell assembly in FIG. 3.
FIG. 5 is a cutaway perspective view of the cell assembly taken along A-A' in FIG. 3.
FIG. 6 is a schematically cross-sectional view of FIG. 5.
FIG. 7 is a partially enlarged view of FIG. 6.
FIG. 8 is a side view of a cell assembly according to an embodiment of the present disclosure.
FIG. 9 is a perspective view illustrating a base plate and a rod member according to an embodiment of the present disclosure.
FIG. 10 is a partially enlarged view of FIG. 9.
FIGS. 11 to 13 are diagrams illustrating the assembly process or assembly structure of a base plate and a plurality of cell assemblies according to an embodiment of the present disclosure.
FIG. 14 is a cutaway perspective view of a battery pack according to an embodiment of the present disclosure.
FIG. 15 is a partially enlarged view of FIG. 14.
FIG. 16 is a partially cross-sectional view of a battery pack according to an embodiment of the present disclosure.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

Throughout the specification of the present application, when a part "includes" a certain element, this indicates that the part may further include other elements unless specifically stated to the contrary.

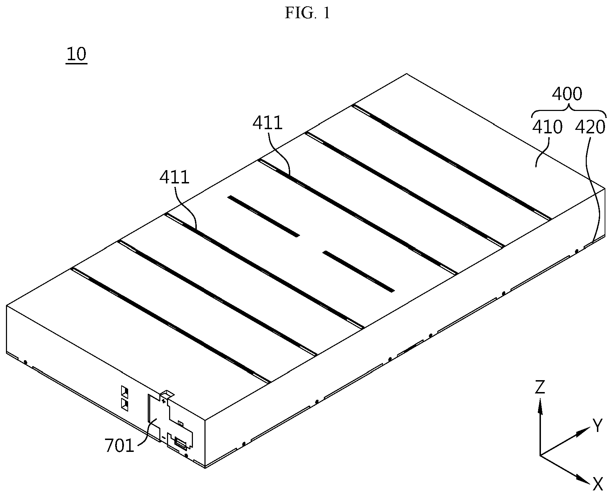

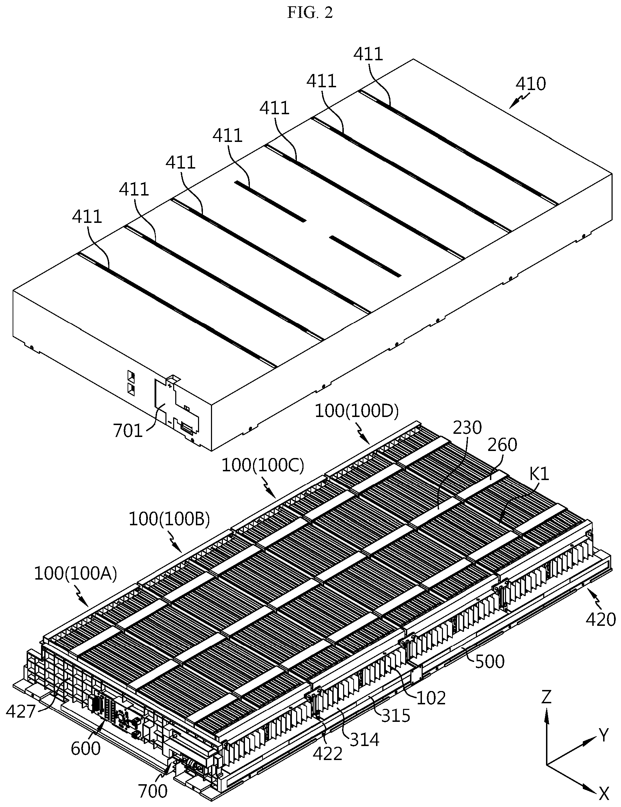

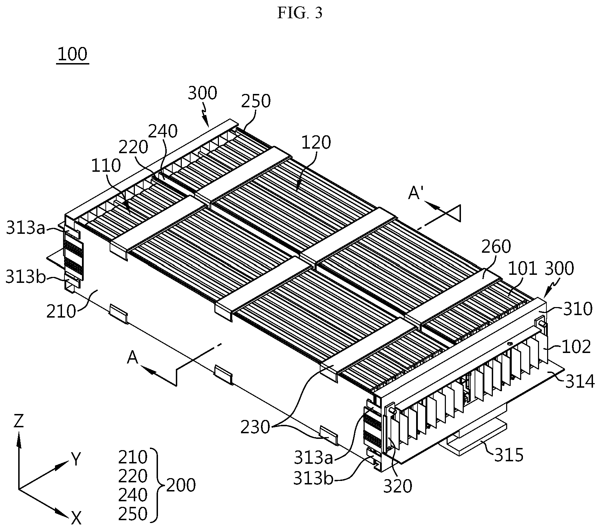

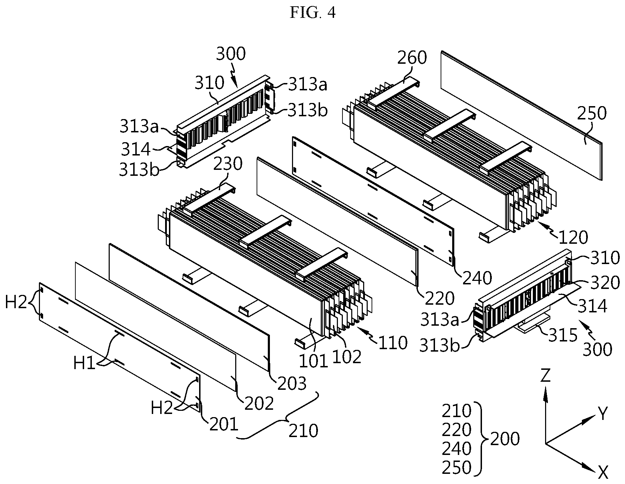

FIG. 1 is a perspective view illustrating a battery pack according to an embodiment of the present disclosure, FIG. 2 is a diagram illustrating the battery pack in FIG. 1 from which a pack cover is separated, FIG. 3 is a perspective view illustrating a cell assembly according to an embodiment of the present disclosure, and FIG. 4 is an exploded perspective view of the cell assembly in FIG. 3.

A battery pack 10 according to the present disclosure includes at least one cell assembly 100 and a pack case 400 accommodating the at least one cell assembly 100.

As shown in FIGS. 1 and 2, the battery pack 10 according to the present embodiment may include a pack case 400 including a pack cover 410 and a base plate 420, and a plurality of cell assemblies 100A, 100B, 100C, and 100D arranged on the base plate 420 in one direction (the Y-axis direction).

Each of the cell assemblies 100 may include two or more cell stacks 110 and 120 having stacked battery cells 101, a cell pressurization unit 200, and a bus-bar frame assembly 300.

One cell assembly 100 may be configured to include two cell stacks or three or four cell stacks. Here, the cell stack indicates a collection of battery cells 101 in which a predetermined number of battery cells 101 having an approximately plate shape are stacked.

The cell stacks 110 and 120 may be configured as pouch-type battery cells 101. As an alternative to the pouch-type battery cells 101, prismatic battery cells 101 in which an electrode assembly is stored in a cuboid metal can may be used.

Specifically, referring to FIGS. 3 and 4, the cell assembly 100 according to this embodiment includes two cell stacks specified as a first cell stack 110 and a second cell stack 120. The first and second cell stacks 110 and 120 are a collection of pouch-type battery cells 101 stacked in one direction (the Y-axis direction). The first and second cell stacks 110 and 120 may be provided in a form in which pouch-type battery cells 101 are stacked in a horizontal direction with their wide surfaces standing perpendicular to the ground.

The pouch-type battery cell 101 may be manufactured by storing an electrode assembly and an electrolyte material inside an exterior pouch case made of a laminated film containing a soft metal and by sealing the exterior pouch case. Here, the electrode assembly includes a positive electrode plate, a negative electrode plate, and a separator interposed between the positive electrode plate and the negative electrode plate. The pouch-type battery cell 101 may include electrode leads 102 that function as electrode terminals, and the electrode leads 102 may be provided to be electrically connected to the electrode assembly and exposed to the outside of the exterior pouch case. This electrode leads 102 include a pair of positive electrode lead and negative electrode lead. The positive electrode lead and the negative electrode lead may be provided at the front and rear portions of the pouch-type battery cell 101, respectively, in the longitudinal direction (the ±X-axis directions) thereof.

In this embodiment, one cell assembly 100 includes a total of 16 pouch-type battery cells 101, and each of the first cell stack 110 and the second cell stack 120 has eight pouch-type battery cells 101. Meanwhile, the number of pouch-type battery cells 101 included in the cell assembly 100 may be increased or reduced depending on the desired energy capacity or output.

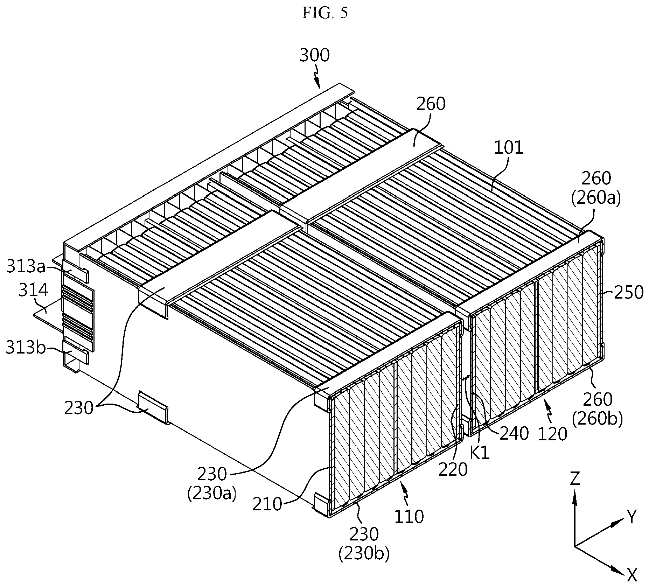

The first cell stack 110 and the second cell stack 120 are arranged to be spaced a predetermined distance apart from each other and parallel to each other. For example, as shown in FIGS. 3 and 5, the first cell stack 110 and the second cell stack 120 are spaced a predetermined distance apart from each other. Therefore, the cell assembly 100 according to this embodiment has an air layer K1 between the first cell stack 110 and the second cell stack 120.

The air layer K1 may serve to block heat transfer between the first cell stack 110 and the second cell stack 120. For example, if a thermal runaway event occurs in one of the battery cells 101 of the second cell stack 120, the air layer K1 may prevent the heat transfer from the second cell stack 120 to the first cell stack 110. Therefore, when a thermal event occurs in a specific battery cell 101, it is possible to block the chain propagation of heat to all battery cells 101 included in the cell assemblies 100.

In addition, the air layer K1 may be used as a movement passage for gas when the gas is generated from the battery cell 101. In the case of internal ignition of the battery pack, if a large amount of gas generated from the battery cells 101 fails to be discharged to the outside, the internal pressure may rise rapidly, causing structural collapse or explosion. Accordingly, in the battery pack 10 according to the present disclosure, the air layer K1 between the first cell stack 110 and the second cell stack 120 may be used as a gas movement passage, and as will be described later, since an upper venting hole 411 and a lower venting hole 425 provided on the pack case 400 are in communication with the air layer K1 in the vertical direction, venting gas may be smoothly discharged to the outside of the battery pack. Therefore, the battery pack according to the present disclosure has a very low risk of structural collapse or explosion due to an increase in internal pressure when internal ignition occurs.

The cell pressurization unit 200 may be disposed at the outermost positions on both sides of each cell stack and configured to provide pressing force to each cell stack. Here, the outermost positions on both sides of the cell stack indicate the outer side of the first battery cell 101 and the outer side of the last battery cell 101 in the stacking direction of the battery cells 101.

Specifically, referring to FIGS. 3 and 4, the cell pressurization unit 200 according to the present embodiment may include first cell pressurization units 210 and 220 for pressurizing the first cell stack 110, and second cell pressurization units 240 and 250 for pressurizing the second cell stack 120.

The first cell pressurization units 210 and 220 may include a first left pressurization unit 210 and a first right pressurization unit 220, and the second cell pressurization units 240 and 250 may include a second left pressurization unit 240 and a second right pressurization unit 250.

The first left pressurization unit 210 may be disposed to come into contact with the leftmost battery cell 101 of the first cell stack 110, the first right pressurization unit 220 may be disposed to come into contact with the rightmost battery cell 101 of the first cell stack 110, the second left pressurization unit 240 may be disposed to come into contact with the leftmost battery cell 101 of the second cell stack 120, and the second right pressurization unit 250 may be disposed to come into contact with the rightmost battery cell 101 of the second cell stack 120.

Each of the first left pressurization unit 210, the first right pressurization unit 220, the second left pressurization unit 240, and the second right pressurization unit 250 may be configured as a rigid plate 201 made of a metal material with high mechanical rigidity or a reinforced plastic material.

The first cell stack 110 may be pressurized by the first left pressurization unit 210 and the first right pressurization unit 220, and the second cell stack 120, positioned to be spaced a predetermined distance apart from the first cell stack 110, may be pressurized by the second left pressurization unit 240 and the second right pressurization unit 250.

For example, when assembling the cell assembly 100, the first cell stack 110 may be pressurized by the first left pressurization unit 210 and the first right pressurization unit 220, and then the first cell stack 110, the first left pressurization unit 210, and the first right pressurization unit 220 may be integrally assembled to the bus-bar frame assembly 300 to be described later. The bus-bar frame assembly 300 may be configured such that both ends of the first left pressurization unit 210 and both ends of the first right pressurization unit 220 are inserted and fixed thereto. If the first left pressurization unit 210 and the first right pressurization unit 220 are coupled to the above bus-bar frame assembly 300, pressing force may be maintained on the first cell stack 110.

In addition, the second cell stack 120 may be pressurized by the second left pressurization unit 240 and the second right pressurization unit 250, and then the second cell stack 120, the second left pressurization unit 240, and the second right pressurization unit 250 may be integrally assembled to the bus-bar frame assembly 300. The bus-bar frame assembly 300 may be configured such that both ends of the second left pressurization unit 240 and both ends of the second right pressurization unit 250 are inserted and fixed thereto. If the second left pressurization unit 240 and the second right pressurization unit 250 are coupled to the bus-bar frame assembly 300, pressing force may be maintained on the second cell stack 120.

In addition, as shown in FIG. 5, the first right pressurization unit 220 and the second left pressurization unit 240 may be assembled to the bus-bar frame assembly 300 such that the first right pressurization unit 220 and the second left pressurization unit 240 are spaced a predetermined distance apart from each other, thereby providing an air layer K1 between the first right pressurization unit 220 and the second left pressurization unit 240.

The cell pressurization unit 200 may be configured as a flat rigid plate 201. However, if the rigid plate 201 is made of metal, there is a problem of securing electrical insulation with the battery cells 101, and the battery cell 101 is likely to be damaged to its surface due to the difference in surface roughness between the battery cell 101 and the rigid plate 201.

Accordingly, the cell pressurization unit 200 according to this embodiment may further include an insulating sheet 202 and a compressible pad 203, as shown in FIG. 4.

The insulating sheet 202 may be attached to the surface of each rigid plate 201. The insulating sheet 202 may be configured in the form of a thin sheet made of a material having insulation properties, fire resistance, and heat insulation properties. For example, silicon or MICA may be used as a material for the insulating sheet 202.

The compressible pad 203 may be disposed between the insulating sheet 202 and the cell stack. The compressible pad 203 may be configured to have one surface in contact with the insulating sheet 202 and the other surface in contact with the outermost battery cell 101 of the cell stack. As described above, by employing the compressible pad 203, the surface pressure caused by the rigid plate 201 may be applied uniformly to the battery cells 101 without damaging the surfaces of the battery cells 101.

Meanwhile, the cell pressurization unit 200 may further include a strap as a means to strengthen the pressing force on the cell stacks.

The strap according to this embodiment may include a first strap member 230 and a second strap member 260, as shown in FIGS. 3 and 4.

The first strap member 230 may have one end fixedly coupled to the first left pressurization unit 210 and the other end fixedly coupled to the first right pressurization unit 220, and may be provided to cross the first cell stack 110 in the width direction thereof so as to partially surround at least one of the top and bottom of the first cell stack 110.

In this embodiment, the first strap member 230 may include a first top strap member 230a partially surrounding the top of the first cell stack 110 and a first bottom strap member 230b partially surrounding the bottom of the first cell stack 110. As a modification of the present embodiment, the first strap member 230 may also be configured to surround the entirety of the top, bottom, and sides of the first cell stack 110.

The second strap member 260 may have one end fixedly coupled to the second left pressurization unit 240 and the other end fixedly coupled to the second right pressurization unit 250, and may be provided to cross the second cell stack 120 in the width direction thereof so as to partially surround at least one of the top and bottom of the second cell stack 120.

In this embodiment, the second strap member 260, substantially like the first strap member 230, may include a second top strap member 260a partially surrounding the top of the second cell stack 120 and a second bottom strap member 260b partially surrounding the bottom of the second cell stack 120.

The first strap member 230 and the second strap member 260 may be configured substantially the same as each other. Therefore, a description of the second strap member 260 will be replaced with a description of the first strap member 230 below.

The first cell stack 110 may be fastened by the first strap member 230 on the top and bottom of the first cell stack 110 while being pressurized by the first left pressurization unit 210 and the first right pressurization unit 220. The first strap member 230 may be made of a metal material with excellent mechanical rigidity. An insulating film may be attached to the surface of the first strap member 230, which surrounds the first cell stack 110, for electrical insulation from the battery cells 101.

As shown in FIG. 4, the rigid plate 201 may be provided with strap fastening holes H1 at the upper and lower ends, respectively. Both ends of the first strap member 230 may be configured to be fitted into the strap fastening holes H1.

For example, the first top strap member 230a may have both ends configured to be bent double in an approximately " 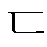 " shape. The tip of one end of the first top strap member 230a may be inserted into the strap fastening hole H1 provided at the upper end of the first left pressurization unit 210, as shown in FIG. 5. In addition, the tip of the other end of the first top strap member 230a may be inserted into a strap fastening hole (not shown) provided at the upper end of the first right pressurization unit 220.

The first bottom strap member 230b has the same configuration as the first top strap member 230a, and may be inserted and coupled to a strap fastening hole H1 provided at the lower end of the first left pressurization unit 210 and a strap fastening hole (not shown) provided at the lower end of the first right pressurization unit 220 in the same manner as the first top strap member 230a.

This first strap member 230 may be applied to positions at predetermined intervals in the longitudinal direction of the first cell stack 110. Preferably, the first strap member 230 may be applied to the central portion of the first cell stack 110 in the longitudinal direction of the first cell stack 110 and the positions spaced a predetermined distance apart to the left and right from the central portion.

Meanwhile, although three first strap members 230 are applied to the top and bottom of the first cell stack 110 in the longitudinal direction of the first cell stack 110 in the present embodiment, unlike this embodiment, two, four, or more first strap members 230 may be applied to the first cell stack 110.

As described above, the first cell stack 110 and the first cell pressurization unit 210 may be integrally bound by the first strap member 230, thereby maintaining the pressurization state of the first cell stack 110 more stably. In addition, the second cell stack 120 and the second cell pressurization units 240 and 250 may be integrally bound by the second strap member 260, thereby maintaining the pressurization state of the second cell stack 120 more stably.

The bus-bar frame assembly is disposed at the front and rear of the first and second cell stacks 110 and 120, respectively, which are spaced a predetermined distance apart from each other in the left and right directions (the ±Y-axis directions) to be parallel to each other. In other words, the bus-bar frame assembly 300 is disposed at the front and rear of the cell stacks in a direction intersecting the stacking direction of the battery cells 101.

The bus-bar frame assembly 300 may be configured to integrally support the cell stacks and the cell pressurization unit 200 and electrically connect the battery cells 101.

The bus-bar frame assembly 300 may be provided to correspond to the number of cell stacks. In other words, although the bus-bar frame assembly 300 of this embodiment is designed to correspond to two cell stacks, for example, if there are three cell stacks, the bus-bar frame assembly 300 may also be configured to support and electrically connect the three cell stacks.

The bus-bar frame assembly 300 includes a bus-bar frame 310 and a plurality of bus-bars 320.

The bus-bar frame 310 may be made of an electrically insulating material and may be configured to have a size capable of integrally covering the front face or rear face of the first cell stack 110 and the second cell stack 120. In addition, the bus-bar frame 310 may have lead slits through which a predetermined number of electrode leads 102 may pass in the forward and backward directions (the ±X directions). The lead slits may be provided at predetermined intervals in the stacking direction of the battery cells 101.

The plurality of bus-bars 320 may be configured in the form of a rod or plate made of an electrically conductive metal material such as copper, aluminum, nickel, or the like. The plurality of bus-bars 320 may be mounted to the bus-bar frame 310 at regular intervals in the stacking direction of the battery cells 101.

The pouch-type battery cells 101 constituting each of the first cell stack 110 and the second cell stack 120 may have electrode leads 102 passing through the corresponding lead slits thereof and extending to the outside of the bus-bar frame 310. That is, as shown in FIG. 3, the electrode leads 102 extending to the outside of the bus-bar frame 310 may be bent and fixedly attached to the surfaces of the bus-bars 320 corresponding thereto. For example, the bus-bar 320 and the electrode lead 102 may be fixedly coupled to each other by laser welding or ultrasonic welding. For example, the positive electrode leads of two battery cells 101 are attached to a specific bus-bar 320 while overlapping each other, and the negative electrode leads of other two battery cells 101 are attached to the specific bus-bar 320 while overlapping each other. As a result, the four battery cells 101 may be connected to each other in series and/or parallel. If the electrode leads 102 of the battery cells 101 are attached to the corresponding bus-bars in this manner, all battery cells 101 included in the first cell stack 110 and the second cell stack 120 may be connected in series and/or parallel.

For reference, in the present embodiment, one cell assembly 100 includes a total of 16 battery cells 101. A total of 16 battery cells 101 is configured such that four battery cells 101 are connected in parallel, respectively, through the bus-bars 320 and such that four sets of battery cells 101, which are connected in parallel, are connected in series to each other. Therefore, in one cell assembly 100 according to the present embodiment, 16 battery cells are electrically connected in a 4S4P form.

In addition, the cell assembly 100 according to this embodiment has a structure in which the 16 battery cells 101 are divided into 2 groups of 8 battery cells 101 to be pressurized. That is, as described above, the cell assembly 100 has a structure in which the first cell stack 110 and the second cell stack 120 are independently pressurized.

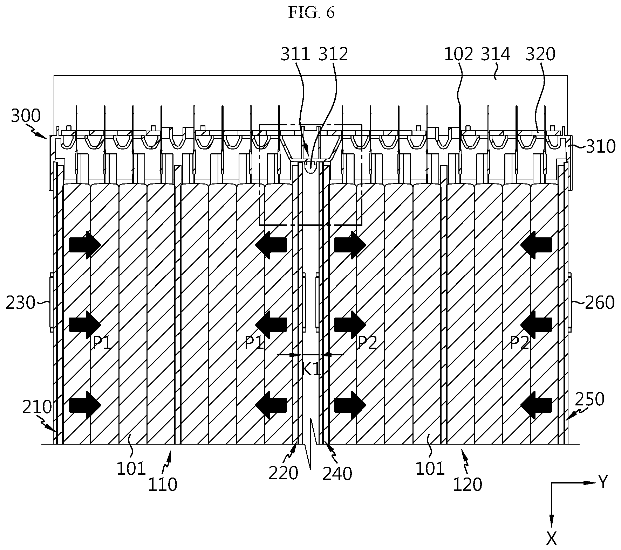

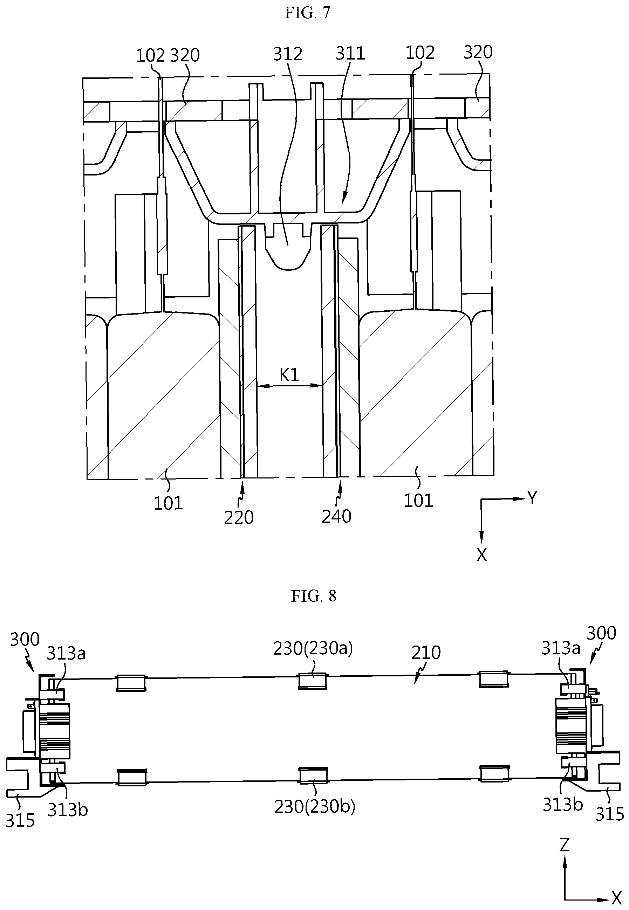

Referring to FIGS. 6 to 7, the bus-bar frame assembly 300 according to an embodiment of the present disclosure may include a central insertion portion 311 into which the end of the first right pressurization unit 220 and the end of the second left pressurization unit 240 are inserted.

The central insertion portion 311 may have a gap maintenance protrusion 312 protruding into the space between the end of the first right pressurization unit 220 and the end of the second left pressurization unit 240.

The first cell stack 110 may be disposed on the left side of the gap maintenance protrusion 312 while being pressurized by the first cell pressurization units 210 and 220 as indicated by "P1", and the second cell stack 120 may be disposed on the right side of the gap maintenance protrusion 312 while being pressurized by the second cell pressurization units 240 and 250 as indicated by "P2". The gap maintenance protrusion 312 may serve to guide relative positions between components when assembling the bus-bar frame 310 to the first cell stack 110 and the second cell stack 120.

In addition, the gap maintenance protrusion 312 prevents the end of the first right pressurization unit 220 and the end of the second left pressurization unit 240 from coming into contact with each other, so that the air layer K1 between the first cell stack 110 and the second cell stack 120 is not blocked.

As shown in FIG. 4, the bus-bar frame assembly 300 may have hooks 313a and 313b on both sides of the bus-bar frame 310. The hooks 313a and 313b may include an upper hook 313a and a lower hook 313b. In addition, the first left pressurization unit 210 and the second right pressurization unit 250 may respectively have hook fastening holes H2. The hook fastening holes H2 may include an upper fastening hole and a lower fastening hole.

The upper hook 313a and lower hook 313b provided on the left portion of the bus-bar frame 310 may be hooked and coupled to the upper fastening hole and lower fastening hole of the first left pressurization unit 210, respectively, as shown in FIG. 5. In addition, the upper hook 313a and lower hook 313b provided on the right portion of the bus-bar frame 310 may be hooked and coupled to the upper and lower fastening holes of the second right pressurization unit 250, respectively.

In addition, referring to FIGS. 3 to 4 and FIG. 8, the bus-bar frame assembly 300 according to the present embodiment may further include a holding plate 314 to be seated on the upper surface of a support frame 422 of a base plate 420, which will be described later, and a seating guide block 315 protruding downward from the holding plate 314.

The holding plate 314 and the seating guide block 315 are elements to improve assembly and fixation between the plurality of cell assemblies 100 and the base plate 420. The holding plate 314 and the seating guide block 315 will be described below in connection with the base plate 420.

The battery pack 10 according to the present disclosure includes one or more cell assemblies 100 described above. For example, as shown in the implemented configuration in FIG. 2, the battery pack 10 may include four cell assemblies 100 disposed side by side. In addition, the battery pack 10 may include a pack case 400 to protect the four cell assemblies 100 from the outside.

The battery pack 10 may include a base plate 420 that supports the four cell assemblies 100 at the bottom of the four cell assemblies 100, and a pack cover 410 that covers the four cell assemblies 100 and is coupled to the base plate 420.

The pack cover 410 may be configured in the form of a rectangular box with an open bottom, and the base plate 420 may be configured in the form of a plate having an enough area for the plurality of cell assemblies 100 to be seated thereon.

The base plate 420 may include an electrical-equipment installation portion 427 provided at one edge in the form of a plate perpendicular to the bottom surface 421. The electrical-equipment installation portion 427 may have an outer surface to which a BMS assembly 600 and a pack terminal unit 700 including electrode terminals of the battery pack 10, a fuse, and the like may be mounted. The pack terminal unit 700 may be configured to be exposed or shielded using a terminal cover 701 that is detachably provided on the pack cover 410.

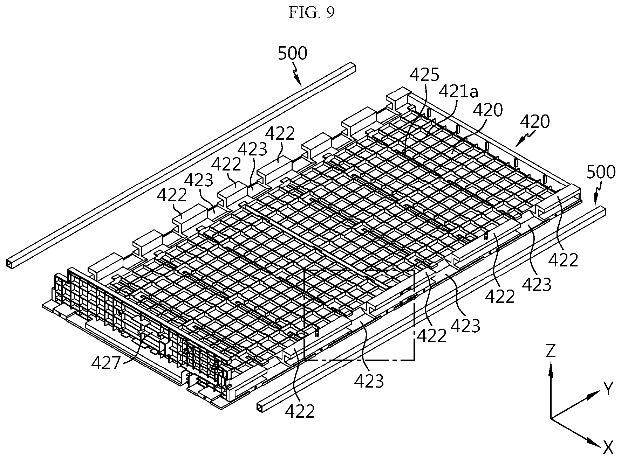

In addition, as shown in FIG. 9, the base plate 420 may include support frames 422 that are provided in the edge region extending in the arrangement direction of the cell assemblies 100 and protrude upward at predetermined intervals in the arrangement direction of the cell assemblies 100, and recesses 423 provided between the neighboring support frames. Here, the arrangement direction of the cell assemblies 100 is the same as the stacking direction of the battery cells 101, and the edge region extending in the arrangement direction of the cell assemblies 100 includes the edge regions of the base plate 420 in the - X-axis direction and the +X-axis direction in FIG. 9.

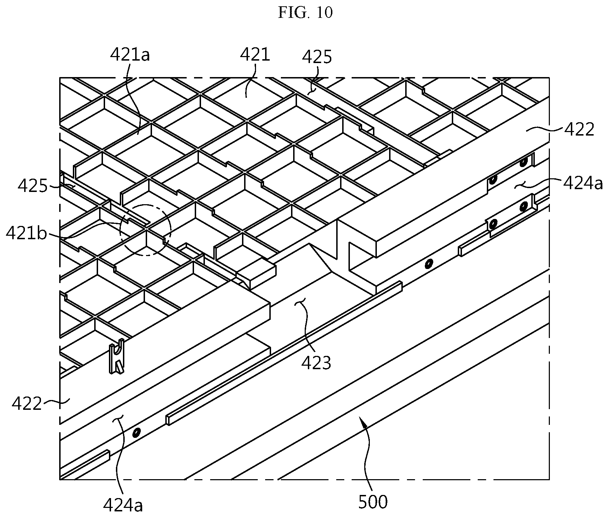

Referring to FIG. 10, the support frame 422 has a shape in which the outer surface is recessed inward. The recessed shape is roughly in the " 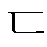 " shape, and this shape matches the shape of a rod member 500, which will be described later. Meanwhile, the recessed shape may be any shape, instead of the " 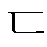 " shape, as long as it matches the rod member in shape.

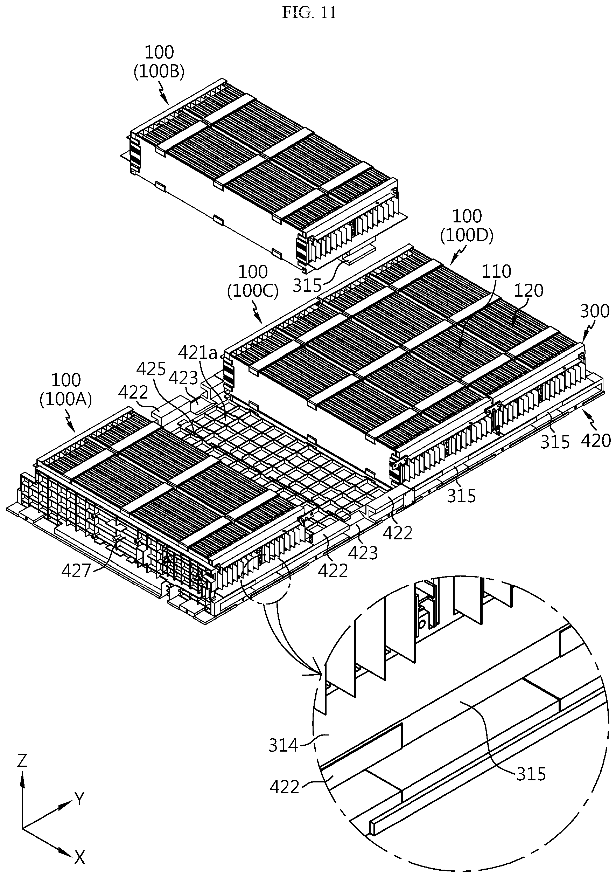

As shown in FIG. 10, the recess 423 may be located between two adjacent support frames 422. In addition, the recess 423 may be configured to match, in shape, the seating guide block 315 of the bus-bar frame 310, as shown in FIG. 11.

Next, the assembly structure and fixing structure between the base plate 420 and the plurality of cell assemblies 100 will be described with reference to FIGS. 11 to 13.

Each cell assembly 100 includes a bus-bar frame assembly 300 equipped with a seating guide block 315, and the base plate 420 has recesses 423 at every specific position. The number of seating guide blocks 315 provided in the cell assemblies 100 is the same as the number of recesses 423 provided in the base plate 420. In addition, the recesses 423 may be provided on the edge region of the base plate 420 such that when the seating guide blocks 315 of respective cell assemblies 100 are inserted into the recesses 423 corresponding thereto, the cell assemblies 100 are disposed to be spaced a predetermined distance apart from each other on the base plate 420. In addition, each cell assembly 100 is provided with a holding plate 314 to be disposed in contact with the upper surface of the support frame 422.

Since the battery pack 10 according to the present disclosure includes the above-described configurations, if the respective cell assemblies 100 are assembled to the base plate 420 such that the seating guide blocks 315 and the recesses 423 are coupled to each other by shape matching, as shown in FIG. 11, the plurality of cell assemblies 100 may be easily disposed in their correct positions on the base plate 420, respectively.

In addition, since the seating guide block 315 is inserted to be seated on the recess 423 between two support frames 422 by shape matching, each cell assembly 100 may be fixed in the ±Y-axis directions with respect to the base plate 420 in FIG. 11.

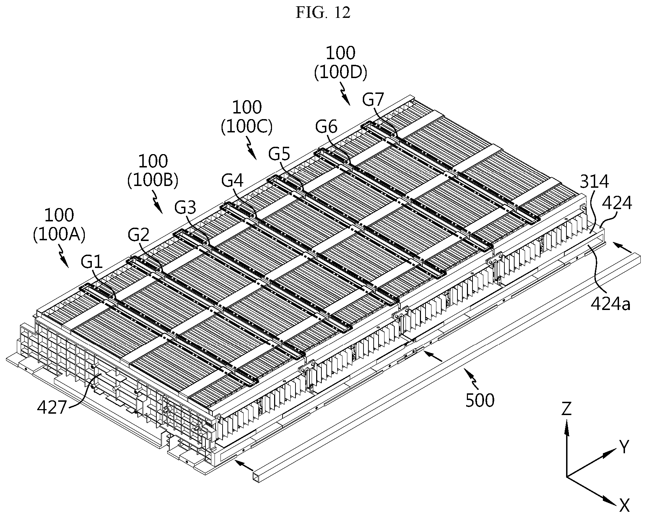

Referring to FIG. 12, when the cell assemblies 100 are seated on the base plate 420 by inserting the respective seating guide blocks 315 into the recesses 423 corresponding thereto, the respective seating guide blocks 315 and support frames 422 may be configured to form a continuous assembly wall 424 along the arrangement direction of the cell assemblies 100.

The assembly wall 424 may have a rod insertion portion 424a where the outer surface is recessed inward. As shown in FIG. 12, a rod member 500 may be inserted into the rod insertion portion 424a. The rod member 500 may be configured in the form of a pipe having a length corresponding to the length of the assembly wall 424. In addition, the rod member 500 is preferably made of a metal material with excellent rigidity, such as steel. This rod member 500 may be applied to both edge regions of the base plate 420 (see FIG. 9) substantially in the same manner.

Meanwhile, a fixing bracket may be mounted to the base plate 420 in order to prevent the rod member 500 from being easily separated from the rod insertion portion 424a. For example, as shown in FIG. 2, after the rod member 500 is inserted into the rod insertion portion 424a, the fixing bracket may be coupled to the support frame 422 of the base plate 420.

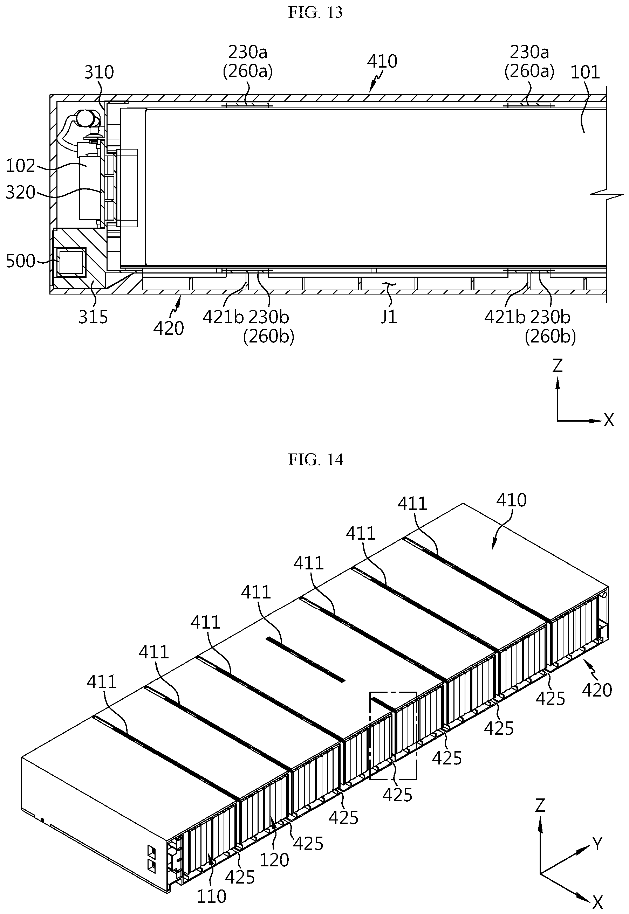

According to this implemented configuration, all cell assemblies 100 may be fixed to the base plate 420 in the ±X-axis directions, ±Y-axis directions, and ±Z-axis directions. That is, each cell assembly 100 is sandwiched between the support frames 422 (in both edge regions) of the base plate 420, so the movement thereof in the ±X directions is restricted. In addition, as shown in FIG. 13, the rod member 500 is inserted into the seating guide block 315 of each cell assembly 100, so the movement in the ±X-axis directions and ±Z-axis directions is restricted. Furthermore, as described above, the seating guide block 315 of each cell assembly 100 is inserted into the recess 423, so the movement in the ±Y-axis directions is restricted.

Referring to FIGS. 9, 10, and 13, the base plate 420 according to an embodiment of the present disclosure may include a support rib 421a that protrudes from the bottom surface 421 in a lattice structure and supports the cell stacks to be spaced apart from the bottom surface 421, and at least one lower venting hole 425 formed to pass through the bottom surface 421.

The support rib 421a may contribute to increasing the strength of the base plate 420. In particular, the support rib 421a may include a strap support portion 421b that protrudes more upwards at a specific position than other portions. The specific position corresponds to the strap member 230 or 260. For example, as shown in FIG. 13, the strap support portion 421b may be located below the first bottom strap member 230b or the second bottom strap member 260b. In this case, the battery cells 101 may be spaced a predetermined distance apart from the bottom surface 421 of the base plate 420 without being in direct contact with the support rib 421a.

Therefore, a buffer space J1 may be obtained between the cell stack and the bottom surface 421 of the base plate 420, as indicated by "J1" in FIGS. 13 to 15. The buffer space J1 may be used as a gas flow passage when gas or the like is ejected from a specific battery cell 101.

Meanwhile, the battery cell 101 is a pouch-type battery cell 101, and a three-side sealing pouch-type battery cell 101, in which the lower edge portion is sealed, may be adopted.

Specifically, the pouch-type battery cell 101 may have a receiving portion and edge portions. Here, the receiving portion may be specified as a portion that receives an electrode assembly obtained by stacking a positive electrode plate and a negative electrode plate on each other with a separator interposed therebetween. In addition, the edge portions may be specified as portions surrounding the receiving portion.

In particular, the edge portion may be a sealing portion where the exterior pouch case, which is a case of the pouch-type battery cell 101, is heat-fused and sealed. The edge portions may be located at an upper edge, a lower edge, a front edge, and a rear edge, respectively, with respect to the receiving portion. In this case, all four edge portions of the pouch-type battery cell 101 may be sealing portions, or some of the four edge portions may be configured to be folded rather than the sealing portion. For example, the lower edge portion E1, the front edge portion, and the rear edge portion may be all sealing portions, but the upper edge portion may be a folded portion of the exterior pouch case.

As described above, a pouch-type battery cell 101 having all four edge portions that are sealed is referred to as a four-side sealing cell, and a battery cell 101 having three edge portions that are sealed is referred to as a three-side sealing cell.

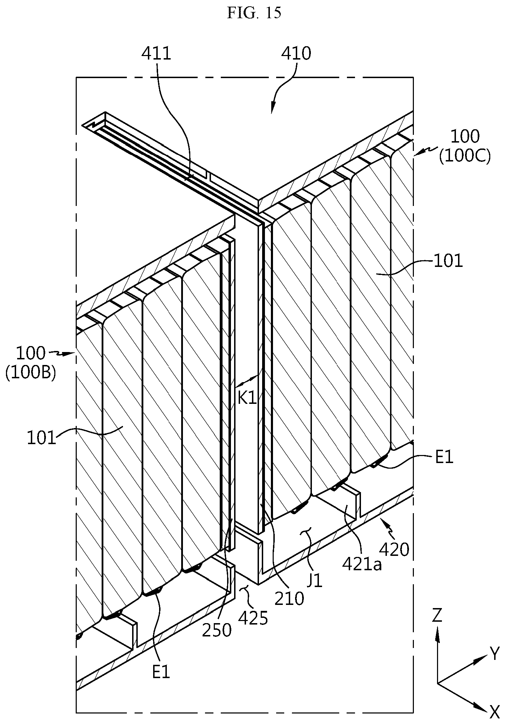

As shown in FIG. 15, in the battery cell 101 according to the present embodiment, the cell stack may be configured such that the upper edge portion, where the exterior pouch case is simply folded, is directed to the pack cover 410 and such that the lower edge portion E1, where the exterior pouch case is sealed, is directed to the base plate 420.

In the case of the pouch-type battery cell 101, if gas is generated to continuously increase the internal pressure, the lower edge portion E1 may open first due to deterioration of its sealing, so that gas or high-temperature particles (active materials or electrode pieces detached from the electrode assembly) may be ejected toward the base plate 420 through the lower edge portion E1. In this case, since the buffer space J1 is provided between the cell stack and the base plate 420 as described above, the gas or particles may be easily discharged.

The base plate 420 may be made of a metal material with high rigidity and fire resistance capable of withstanding high-temperature gas, particles, flame, or the like. In order to increase the fire resistance of the base plate 420, the base plate 420 may have a fire-resistant coating layer on the bottom surface 421.

Meanwhile, a plurality of cell assemblies 100 according to an embodiment of the present disclosure is fixed to the base plate 420 to be spaced a predetermined distance apart from each other, as described above.

As described above, since the plurality of cell assemblies is spaced apart from each other, air layers K1 are provided between the cell assemblies 100, that is, at the locations indicated by G2, G4, and G6 in FIG. 12. In addition, as described above, air layers K1 are formed at the locations indicated by G1, G3, G5, and G7 in FIG. 12 corresponding to the portions between the first cell stack 110 and the second cell stack 120 spaced apart from each other in each cell assembly 100. Therefore, the air layers K1 exist between all cell stacks constituting the battery pack 10 according to the present disclosure.

These air layers K1 may serve to restrict heat transfer between all cell stacks included in the battery pack and serve as a movement passage for gas when the gas is generated from the battery cell.

The pack cover 410 of this embodiment may have an upper venting hole 411 formed to pass therethrough, and the base plate 420 may have a lower venting hole 425 formed to pass therethrough. The upper venting hole 411 and the lower venting hole 425 may be formed to be symmetrical to each other in the vertical direction. In addition, the upper venting hole 411, the air layer K1, and the lower venting hole 425 may be configured to match each other in the vertical direction, as shown in FIGS. 14 and 15.

According to the configuration of the battery pack 10 of the present disclosure described above, the following effects may be obtained.

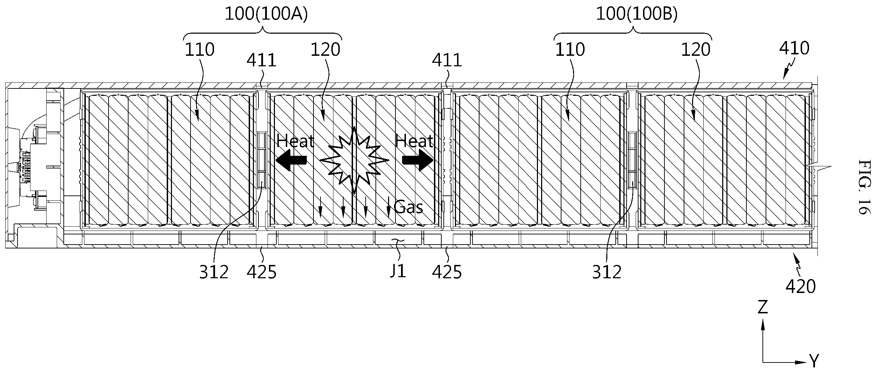

For example, as shown in FIG. 16, if thermal runaway occurs in a certain battery cell 101 (hereinafter referred to as a trigger cell) among the battery cells 101 constituting the second cell stack 120 of the first cell assembly 100, the propagation of heat generated from the trigger cell may be limited within the second cell stack 120 that includes the trigger cell. Specifically, the air layer K1 between the second cell stack 120 of the first cell assembly 100 and the first cell stack 110 of the first cell assembly 100, and the air layer K1 between the second cell stack 120 of the first cell assembly 100 and the first cell stack 110 of the second cell assembly 100 may block the propagation of heat.

In addition, if gas generated inside the trigger cell during the thermal runaway increases the internal pressure, the sealing portion of the exterior pouch case may break, so that high-temperature gas may be ejected. At this time, since the battery cell 101 is disposed such that the lower edge portion having the sealing portion faces the base plate 420, most of the gas generated from the battery cell 101 may be guided to head to the base plate 420.

As described above, the battery pack 10 according to this embodiment has a buffer space J1 between the bottom surface 421 of the base plate 420 and the cell stacks, and this buffer space J1 functions as a venting path for gas. Furthermore, the battery pack 10 includes an air layer K1 between the first cell stack 110 and the second cell stack 120 of each cell assembly 100, and an air layer K1 between two cell assemblies 100 adjacent to each other, and is configured such that the upper portion of each air layer K1 communicates with the upper venting hole 411 of the pack cover 410 and such that the lower portion of each air layer K1 communicates with the lower venting hole 425 of the base plate 420. Therefore, the gas ejected from the battery cell 101 may pass through the buffer space J1 and/or the air layer K1 and may be discharged to the outside of the battery pack 10 via the upper venting hole 411 or the lower venting hole 425.

In particular, in the battery pack 10 according to this embodiment, the buffer space J1 between the cell stack and the bottom surface 421 of the base plate 420, and the upper venting holes 411 and lower venting holes 425 corresponding one-to-one to the air layers K1 between the cell stacks 110 and 120 are provided in the pack case 400. Therefore, the high-temperature and high-pressure gas generated from the battery cells 101 may be uniformly distributed and discharged to the outside of the pack case 400. Accordingly, collapse or deformation of the battery pack 10 may be prevented when gas is emitted from the battery cells 101.

Meanwhile, an energy storage system according to the present disclosure may be configured to include one or more battery packs 10 described above.

In addition, the energy storage system may further include a master battery management system for integrated control of the battery packs.

Although the present disclosure have been illustrated with reference to specific embodiments and drawings, the present disclosure is not limited to the specific embodiments described above, and it should be noted that there may be various changes and modifications by those skilled in the art to which the present disclosure pertains without departing from the scope of the present disclosure as claimed in the claims.

Meanwhile, although terms indicating directions such as upward, downward, left, right, forward, and backward are used in this specification, it is obvious to those skilled in the art that these terms are only for convenience of explanation and may vary depending on the location of the target object or the location of the observer.

## Claims

1. A battery pack comprising:
at least one cell assembly; and
a pack case configured to accommodate the at least one cell assembly,
wherein the cell assembly comprises:
two or more cell stacks comprising stacked battery cells;
a cell pressurization unit disposed at the outermost positions on both sides of each cell stack in the stacking direction of the battery cells and configured to provide pressing force to each cell stack; and
a bus-bar frame assembly disposed at the front and rear of the cell stacks in a direction intersecting the stacking direction of the battery cells and configured to electrically connect the battery cells and integrally support the two or more cell stacks and the cell pressurization unit.

2. The battery pack according to claim 1,
wherein the battery cell is a pouch-type battery cell,
wherein the cell stacks comprise: a first cell stack; and a second cell stack spaced a predetermined distance apart from the first cell stack and disposed parallel to the first cell stack, and
wherein an air layer is provided between the first cell stack and the second cell stack.

3. The battery pack according to claim 2,
wherein the cell pressurization unit comprises:
a first left pressurization unit in contact with the leftmost battery cell of the first cell stack;
a first right pressurization unit in contact with the rightmost battery cell of the first cell stack;
a second left pressurization unit in contact with the leftmost battery cell of the second cell stack; and
a second right pressurization unit in contact with the rightmost battery cell of the second cell stack.

4. The battery pack according to claim 3,
wherein each of the first left pressurization unit, the first right pressurization unit, the second left pressurization unit, and the second right pressurization unit comprises a rigid plate made of a metal material with high mechanical rigidity or a reinforced plastic material.

5. The battery pack according to claim 4,
wherein each of the first left pressurization unit, the first right pressurization unit, the second left pressurization unit, and the second right pressurization unit comprises:
an insulating sheet attached to the surface of the rigid plate; and
a compressible pad having one surface in contact with the insulating sheet and the other surface in contact with the battery cell.

6. The battery pack according to claim 3,
wherein the first right pressurization unit and the second left pressurization unit are spaced a predetermined distance apart from each other, and
wherein an air layer is provided between the first right pressurization unit and the second left pressurization unit.

7. The battery pack according to claim 3,
wherein the bus-bar frame assembly comprises
a central insertion portion into which the end of the first right pressurization unit and the end of the second left pressurization unit are inserted, and
wherein the central insertion portion comprises a gap maintenance protrusion protruding into a space between the end of the first right pressurization unit and the end of the second left pressurization unit.

8. The battery pack according to claim 3,
wherein the cell pressurization unit further comprises:
a first strap member having one end fixedly coupled to the first left pressurization unit and the other end fixedly coupled to the first right pressurization unit, and configured to cross the first cell stack in the width direction thereof so as to partially surround at least one of the top and bottom of the first cell stack; and
a second strap member having one end fixedly coupled to the second left pressurization unit and the other end fixedly coupled to the second right pressurization unit, and configured to cross the second cell stack in the width direction thereof so as to partially surround at least one of the top and bottom of the second cell stack.

9. The battery pack according to claim 3,
wherein the bus-bar frame assembly comprises:
a bus-bar frame made of an electrically insulating material and configured to have a size capable of covering the front face or rear face of the first cell stack and the second cell stack; and
a plurality of bus-bars made of a metal material, mounted to the bus-bar frame, and connected to electrode leads of the battery cells.

10. The battery pack according to claim 1,
wherein the at least one cell assembly is a plurality of cell assemblies arranged side by side, and
wherein the pack case comprises:
a base plate configured to support the plurality of cell assemblies at the bottom of the plurality of cell assemblies; and
a pack cover configured to cover the plurality of cell assemblies and coupled to the base plate.

11. The battery pack according to claim 10,
wherein the base plate comprises:
support frames provided in an edge region extending in the arrangement direction of the cell assemblies and configured to protrude upward at predetermined intervals in the arrangement direction of the cell assemblies and support the bus-bar frame assembly of each cell assembly; and
recesses provided between the neighboring support frames, and
wherein the bus-bar frame assembly of each cell assembly comprises:
a holding plate disposed on the upper surface of the support frame; and
a seating guide block protruding downward from the holding plate so as to be inserted into the recess corresponding thereto.

12. The battery pack according to claim 11,
wherein, when the cell assemblies are seated on the base plate by inserting the respective seating guide blocks into the recesses corresponding thereto, the respective seating guide blocks and support frames are configured to form a continuous assembly wall along the arrangement direction of the cell assemblies,
wherein the assembly wall has a rod insertion portion where the outer surface thereof is recessed inward, and
wherein a rod member having a length corresponding to the length of the assembly wall is inserted into the rod insertion portion.

13. The battery pack according to claim 10,
wherein the battery cell is a pouch-type battery cell,
wherein the pouch-type battery cell comprises an exterior pouch case configured to store an electrode assembly and having a lower edge portion, a front edge portion, and a rear edge portion, which are heat-fused,
wherein the cell stacks are disposed such that the lower edge portion of the exterior pouch case is directed to the base plate, and
wherein the base plate comprises:
a support rib configured to protrude from the bottom surface in a lattice structure and support the cell stacks to be spaced apart from the bottom surface; and
at least one venting hole formed to pass through the bottom surface.

14. The battery pack according to claim 10,
wherein an air layer is provided between the cell stacks that are spaced a predetermined distance apart from each other in the stacking direction of the battery cells,
wherein the pack cover has an upper venting hole formed to pass therethrough,
wherein the base plate has a lower venting hole formed to pass therethrough, and
wherein the upper venting hole, the air layer, and the lower venting hole are configured to match each other in the vertical direction.

15. An energy storage system comprising the battery pack according to any one of claims 1 to 14.
